(19) Europäisches Patentamt
European Patent Office
Office européen des brevets

(11) **EP 2 012 292 A2**

(12) **EUROPEAN PATENT APPLICATION**

(43) Date of publication:
**07.01.2009 Bulletin 2009/02**

(51) Int Cl.:
***G09B 23/12*** *(2006.01)*

(21) Application number: **08252166.7**

(22) Date of filing: **24.06.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventor: **Alvarez-Icaza, Manuel**<br>**Inverness**<br>**Inverness-shire IV2 4FL (GB)** |
| (30) Priority: **25.06.2007 US 768114** | (74) Representative: **Tunstall, Christopher Stephen et al**<br>**Carpmaels & Ransford**<br>**43-45 Bloomsbury Square**<br>**London WC1A 2RA (GB)** |
| (71) Applicant: **Lifescan Scotland Limited**<br>**Inverness-Shire IV2 3ED (GB)** | |

(54) **Method for training a user in recognition of the user's bodily fluid analyte concentration and concentration trends via user-perceived sensations**

(57) A method for training a user in recognition of the user's bodily fluid analyte concentration and concentration trends includes monitoring a user's bodily fluid analyte concentration (for example, a user's whole blood glucose concentration) with an analyte monitoring module of a device for training a user in recognition of the user's bodily fluid analyte concentration. The method also includes generating, at a predetermined time interval, using a generation module of the device, a user-perceived sensation (e.g., a user-perceived vibratory sensation) that is proportional the user's bodily fluid analyte concentration in a predetermined manner.

EP 2 012 292 A2

**Description**

**BACKGROUND OF THE INVENTION**

1. Field of the Invention

The present invention relates, in general, to medical devices and, in particular, to medical training aid devices and associated methods.

2. Problem to be Solved

Medical conditions, such as diabetes, can require patients to manage the condition through lifestyle behavior, such as diet and exercise, either alone or in combination with medication (e.g., insulin). For example, a patient with type II diabetes may manage the condition by eating various foods, avoiding certain foods and/or practicing an exercise regimen. It is typical for such patients to self-monitor their condition based on a perception of their physical state, for example whether they are tired, dizzy or experiencing a headache.
A conventional practice for type II diabetics is for their blood glucose level control to be tested relatively infrequently test via a determination of their HbA1c level. Such HbA1c levels provide a long-term indication of the level of control of the patient's diabetes over the previous 3 month period. Conversely, type I diabetics typically monitor their blood glucose levels frequently using commercially available blood glucose monitoring devices.

**BRIEF DESCRIPTION OF THE DRAWINGS**

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings, in which like labels indicate like elements, of which:

FIG. 1 is a simplified block diagram of a device according to an exemplary embodiment of the present invention;
FIG. 2 is a simplified circuit schematic and block diagram depicting a control module and sensation generation module of the device of FIG. 1;
FIG. 3 is a set of two graphs depicting exemplary bodily fluid analyte concentrations (i.e., glucose concentrations) and their corresponding user-perceived sensations (i.e., vibratory sensations whose amplitudes are proportional to bodily fluid analyte concentration in a predetermined manner) as can be employed in embodiments of the present invention;
FIG. 4 is another set of two graphs depicting exemplary bodily fluid analyte concentrations (i.e., glucose concentrations) and their corresponding user-perceived sensations (i.e., vibratory sensations whose pulse duration is proportional to bodily fluid concentration in a predetermined manner) as can be employed in embodiments of the present invention;
FIG. 5 is a table listing six glucose concentration ranges and corresponding user-perceived sensations (i.e., user-perceived sensations consisting of a predetermined number of vibration pulses) as can be employed in embodiments of the present invention;
FIG. 6 is a graph of vibration amplitude (in units of volts) as a function of time depicting two user-perceived sensations, each consisting of a series of vibration pulses;
FIG. 7 is a simplified block depiction of a device according to another exemplary embodiment of the present invention;
FIG. 8 is a simplified block diagram of a device according to yet another exemplary embodiment of the present invention; and
FIG. 9 is a flow diagram depicting stages in process according to an exemplary embodiment of the present invention

**DETAILED DESCRIPTION OF ILLUSTRATIVE EMBODIMENTS OF THE INVENTION**

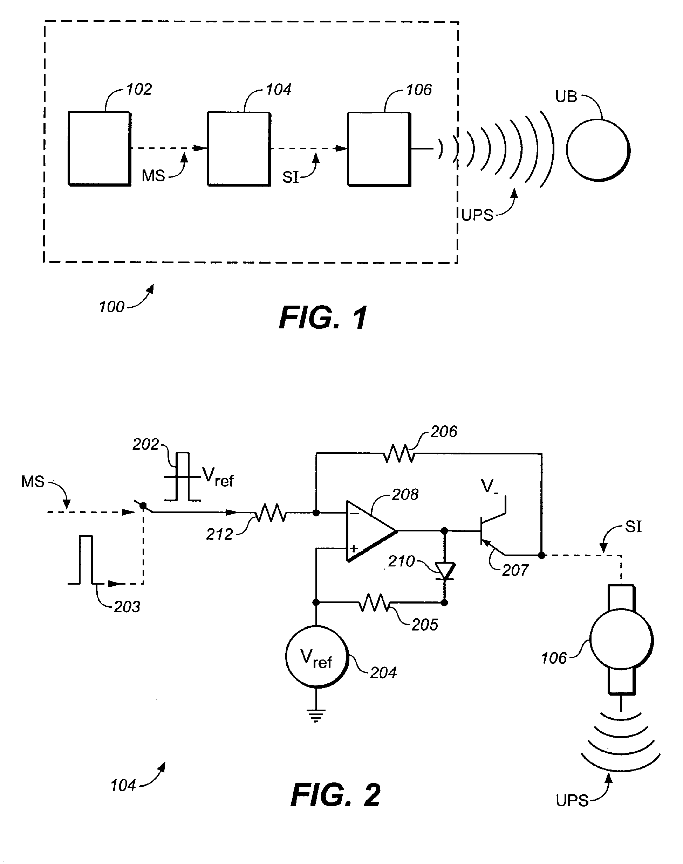

FIG. 1 is a simplified block diagram of a device 100 for training a user in recognition of the user's bodily fluid analyte concentration and bodily fluid analyte concentration trends (e.g., a user's blood glucose concentration and blood glucose concentration trend) via user-perceived sensations (such as a user-perceived vibratory sensation) according to an embodiment of the present invention. Device 100 is also referred to herein as a medical training device and is encompassed by the dashed line of FIG. 1.
Device 100 includes an analyte monitoring module 102 configured to monitor the user's bodily fluid analyte concentration and to output a monitor signal corresponding to the user's bodily fluid analyte concentration. In FIG. 1, the monitor signal is depicted as dashed arrow MS and the user's body by UB.

Analyte monitoring module 102 can be any suitable analyte monitoring module known to one skilled in the art including, for example, analyte monitoring modules that employ optical, acoustic and electromagnetic techniques to monitor bodily fluid analyte concentration in a non-invasive manner and devices that employ automatic sampling and analyte assays based on electrochemical techniques.

Moreover, the analyte monitored by analyte monitoring module 102 can be any suitable analyte including, for example, glucose. For illustrative purposes, various descriptions and explanations herein will employ blood glucose concentrations as the bodily fluid analyte concentration of interest. However, once apprised of the present disclosure, one skilled in the art will recognize that embodiments of the present invention can be employed to train a user in the recognition of the bodily fluid concentration of a variety of bodily fluid analytes. For example, embodiments of the present invention can train a user in the recognition of the bodily fluid concentration of a therapeutic drug.

One skilled in the art will also recognize that a variety of conventional glucose monitoring devices can be readily modified to serve as an analyte monitoring module in embodiments of the present invention including, for example, the glucose monitoring devices described in U.S. Patent Nos. 5,497,772; S,140,985; 6,175,752; 7,110,803 and 7,150,975.

Device 100 also includes a control module 104 configured to receive monitor signal MS output by analyte monitoring module 102, convert the monitor signal into a sensation instruction signal corresponding to the user's bodily fluid analyte concentration, and output the sensation instruction signal. In FIG. 1, the sensation instruction signal is depicted by dashed arrow SI.

Monitor signal MS and sensation instruction signal SI can be any suitable signal known to one skilled in the art including, but not limited to, digital signals, analog signals and optical signals. Typically, monitor signal MS will originate as an analog signal. In practice, however, monitor signal MS and sensation instruction signal SI can be transformed as desired into any suitable type of signal. For example, to transfer (i.e., send or receive) monitor signal MS and sensation signal SI, wires, air and/or direct mechanical contact transfer techniques can be employed, including transfer techniques that employ optical guides, radio frequency signals, mechanical transducers and thermal transducers.

Device 100 further has a sensation generation module 106 configured to receive the sensation instruction signal SI output by control module 104 and generate a user-perceived sensation corresponding to the user's bodily fluid analyte concentration. The user perceived sensation is depicted as the series of curves and labeled UPS in FIG. 1. Moreover, the user-perceived sensation generated by the sensation generation module is proportional to the user's bodily fluid analyte concentration in a predetermined manner (as is described further below) and is generated at predetermined time intervals.

Once apprised of the present disclosure, one skilled in the art will recognize that sensation generation modules employed in embodiments of the present invention can include of any combination of suitable components including, for example, vibration motors (such as commercially available vibration motor VM2401 from Tricore Corporation, Taiwan, R.O.C.), servo motors (such as Futaba S148 Servo Motor, available from Futaba Corporation of America, Schaumburg, Illinois, USA) or heat pumps (e.g., CP1.4-127-06L-RTV Peltier Effect Heat Pump available from Melcor Corporation, New Jersey, USA).

For user-perceived vibratory sensations that vary in amplitude with the concentration of a bodily fluid analyte, the sensation generation module can, for example, include a commercially available speaker that has been modified by removal of the speaker's cone such that the speaker's transducer produces a user-perceived vibratory sensation. An example of such a commercially available speaker is Mylar Speaker VC84F available from Maplin Electronics Ltd., Womell (Barnsley), South Yorkshire, U.K.

It is beneficial for the user-perceived sensation to be discreet so that the device can be employed, and a user can be trained, without attracting undue attention from bystanders. Therefore, the user-perceived sensation is typically non-visual in nature. For example, the user-perceived sensation can be tactile in nature, such as a vibratory sensation, a pressure applied to the user or a user-perceived temperature (i.e., various magnitudes of heat and cold). Moreover, devices according to embodiments the present invention can result in a user perceiving the user-perceived sensation via any suitable portion of the user's body including, for example, a user's finger, wrist, arm or leg.

Once apprised of the present invention, one skilled in the art will recognize that device 100 essentially translates a user's bodily fluid analyte concentration (for example, a continuously or semi-continuously monitored blood glucose concentration) into analog levels of artificially generated user-perceived sensations.

As noted above, the user-perceived sensation is proportional to bodily fluid analyte concentration in a proportional manner with that proportional manner being predetermined. For example, assuming that a monitor signal is output by analyte monitoring module 102 at predetermined time intervals of once every minute (or otherwise received by control module 104 once every minute), sensation generation module 106 will generate a user-perceived vibratory sensation (for example, a vibration pulse of 0.2 seconds duration) at the predetermined time interval of once every minute. Moreover, if desired the amplitude of the user-perceived vibration sensation can be proportional to the bodily fluid analyte concentration only once the bodily fluid concentration has exceeded a minimum value (i.e., a predetermined threshold value). The user-perceived sensation is, under those conditions, proportional to bodily fluid analyte concentrations above the minimum value.

FIG. 2 is a simplified circuit schematic and block diagram depicting control module 104 and sensation generation module 106 of device 100 of FIG. 1. In the embodiment of FIG. 2, monitor signal MS is an analog voltage signal whose amplitude is proportional to a user's blood glucose concentration.

Control module 104 includes a timing pulse 203 (of predetermined width and frequency) generated by a control module digital program (not shown), a reference voltage ($V_{ref}$) generator 204, a power resistor 205, a feedback loop resistor 206 configured to determine a gain constant, a power stage 207 (connected to, for example, a battery), a comparison amplifier 208, a diode 210 and a resistor 212.

Control module 104 is configured such that the frequency and width of timing pulses 203 are predetermined. Monitor signal MS is only sampled when timing pulse 203 is high. The result of sampling monitor signal MS is a sampled signal 202 (depicted relative to $V_{ref}$ in FIG. 2) that has a width identical to timing pulse 203 and a height identical to monitor signal MS. Therefore, the height of sampled signal 202 is controlled to be directly proportional to the glucose concentration as derived from monitor signal MS. Depending on the type of transducer (106), the timing pulse (203) could be a single pulse or a burst of pulses of the vibration frequency. The time length of the burst of pulses is equivalent to the time length of the single timing pulse (203).

The schematic of FIG. 2 illustrates the manner in which control module 104 compares sampled signal 202 to a reference voltage $V_{ref}$ to determine whether or not the glucose concentration is above a predetermined threshold value (for example, 110 mg/dL) represented by the reference voltage. If the glucose concentration is less than or equal to the predetermined threshold value, no sensation instruction signal SI will be output and, therefore, no user-perceived sensation will be generated. If $V_{ref}$ is equal to zero, however, a user-perceived sensation will be generated for any glucose concentration.

When the glucose concentration is above the predetermined threshold value $V_{ref}$ (generated by reference voltage generator 204), then comparison amplifier 208 and feedback loop resistor 206 determine a gain constant. That gain constant provides the predetermined proportionality of the user-perceived sensation, whether the proportionality is, for example, a proportional vibration amplitude and/or proportional vibration frequency. The ratio of resistor 212 and feedback loop resistor 206 determines the amplification of circuit depicted in FIG. 2. Diode 210 and resistor 205 provides an alternative current path for current leaving comparison amplifier 208 when that current is not being used to drive sensation generation module 106.

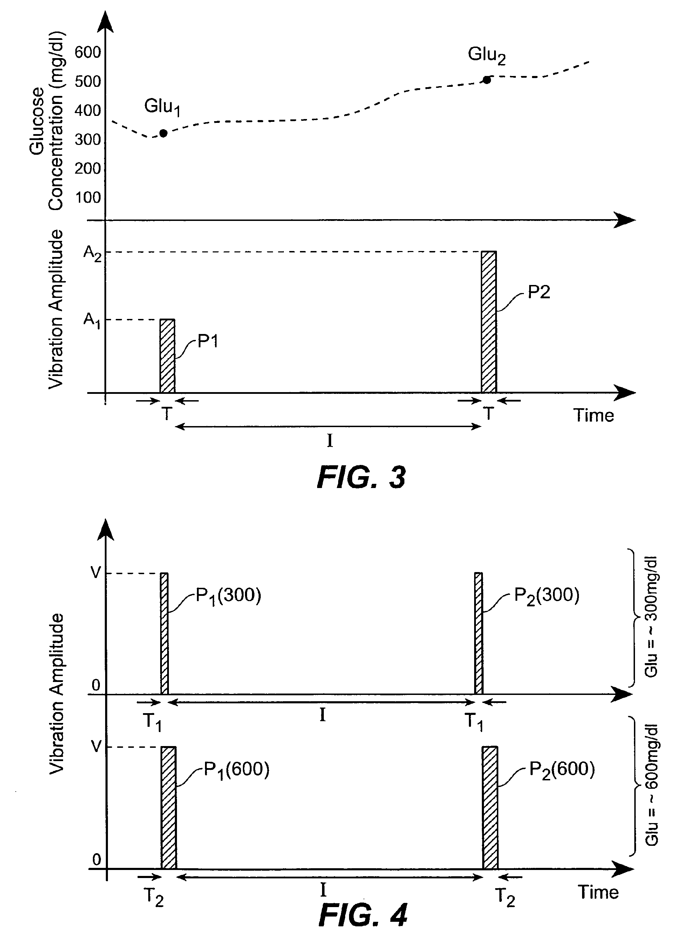

Various manners in which the user-perceived sensation can be proportional to the user's bodily fluid analyte concentration in a proportional manner are described below with respect to FIGs. 3 through 6.

FIG. 3 is a set of two graphs depicting exemplary bodily fluid analyte concentrations (i.e., glucose concentrations) and their corresponding user-perceived sensations (i.e., vibratory sensations whose amplitudes are proportional to glucose concentration in a predetermined manner) as can be employed in embodiments of the present invention. In the upper graph of FIG. 3, the user's glucose concentration variation with time is depicted by a dashed line. The value of a first glucose concentration is labeled $Glu_1$. The corresponding user-perceived vibration pulse $P_1$ (with duration T) has a vibration amplitude $A_1$. A second value of glucose concentration is labeled $Glu_2$, and has a corresponding user-perceived vibration pulse $P_2$ (also of duration T) with a vibration amplitude $A_2$. Predetermined time interval I separates $Glu_1$ and $Glu_2$ and also separates $P_1$, and $P_2$.

Vibration amplitudes of user-perceived sensations in devices according to embodiments of the present invention (for example, $A_1$ and $A_2$ in FIG. 3) can, for example, be generated in a predetermined proportional manner as the positive values of the following algorithm:

$$A_n = \text{constant} * (Glu_n - 110 \text{ mg/dL})$$

where:

n = a number in the sequence of whole numbers starting with 1, i.e., the sequence of 1, 2, 3, 4, 5, ....n;
$A_n$ = the amplitude of the "nth" pulse (for example, $A_1$ is the amplitude of the first pulse [i.e., when n - 1], $A_2$ the amplitude of the second pulse [i.e., when n=2], etc.) and has, for example, units of volts (V) when the user-perceived vibratory amplitude is driven by a voltage;
$Glu_n$ = blood glucose concentration (a bodily fluid analyte concentration) corresponding to the "nth" pulse amplitude;
Constant = a predetermined constant value that is dependent on the electro-mechanical characteristics of a given sensation generation module and can be in a range, for example, between 7mV/mg/dL to 70mV/mg/dL.

Moreover, electro-mechanical characteristics of a sensation generation module can be such that a predetermined maximum vibration amplitude is obtained at, for example, glucose concentrations of 250 mg/dL and greater. In this circumstance and for devices employing the algorithm above, the vibration amplitude will be linearly proportional to glucose concentration for glucose concentrations in the range between 110 mg/dL and 250 mg/dL, will be zero for glucose concentrations of 110 mg/dL or less, and will be a constant maximum vibration amplitude for glucose concentrations of 250 mg/dL and greater.

In this example, embodiment the amplitude of the vibration (e.g. $A_1$ and $A_2$ in FIG. 3) defines the sensation perceived by the user. A user of a device employing the algorithm above would not experience or perceive any sensation if their glucose concentration was less than or equal to 1 10mg/dL. However, at glucose concentrations above 110 mg/dL, the user would start to 'feel' (i.e., perceive) their glucose concentration and changes in their glucose concentration by being subjected to intensities (i.e., amplitudes) of a user-perceived vibratory sensation that are proportional to the glucose concentration. Moreover, since user-perceived sensations in embodiments of the present invention are generated at predetermined time intervals, a user can perceive trends in their glucose concentration over time by perceiving the manner in which the user-perceived sensations change over time.

Variations in vibration amplitude such as those depicted in FIG. 3 may be subject to user perception bias induced by the user's activity level at the time the user is subjected to the user-perceived sensation. For example, if a user is engaged in an intense activity (such as playing sports) versus being in a relaxed condition. Therefore, it can be beneficial for the user-perceived sensation duration to be proportional to bodily fluid analyte concentration rather than the user-perceived sensation amplitude.

FIG. 4 is another set of two graphs depicting exemplary bodily fluid analyte concentrations (i.e., glucose concentrations) and their corresponding user-perceived sensations (i.e., vibratory sensations whose pulse duration is proportional to bodily fluid concentration in a predetermined manner) as can be employed in embodiments of the present invention. The graphs of FIG. 4 depict a constant vibration amplitude V, a rest or interval period I, vibration pulses $P_1$(300) and $P_2$(300) for a first duration $T_1$ (for glucose measurements of approximately 300mg/dL for example), and example vibration pulses $P_1$(600) and $P_2$(600) for a second duration $T_2$ (for glucose measurements of around 600mg/dL for example). In the example of FIG. 4, $T_2$ is longer than $T_1$ and thus, the user-perceived sensation is proportional to the user's bodily fluid analyte concentration.

The user-perceived sensation duration (T) can be determined, for example, by the following algorithm set:

$$T = 0 \text{ for Glu} < 110\text{mg/dL}$$

$$T = K * (\text{Glu} - 110\text{mg/dL}) \quad \text{for} \quad \text{Glu} \geq 110\text{mg/dL}$$

Where:

   Glu is a glucose assessment (mg/dL); and
   K is a proportionality constant

Assuming a Glu of 600mg/dL for example, and a proportionality constant 'K' of 0.01020sec/mg/dL, T is approximately 5 seconds. I (the predetermined time interval) can be, for example, in the range of 1 minute to 2 minutes.

It is envisioned that a user of a device according to the present invention (e.g., device 100 of FIG. 1) incorporating the mode of operation described in relation to FIG. 4 would learn to perceive differences in vibration pulse duration correlated to changes in their blood glucose concentration. Over time, the user would relate the sensations to their blood glucose concentration.

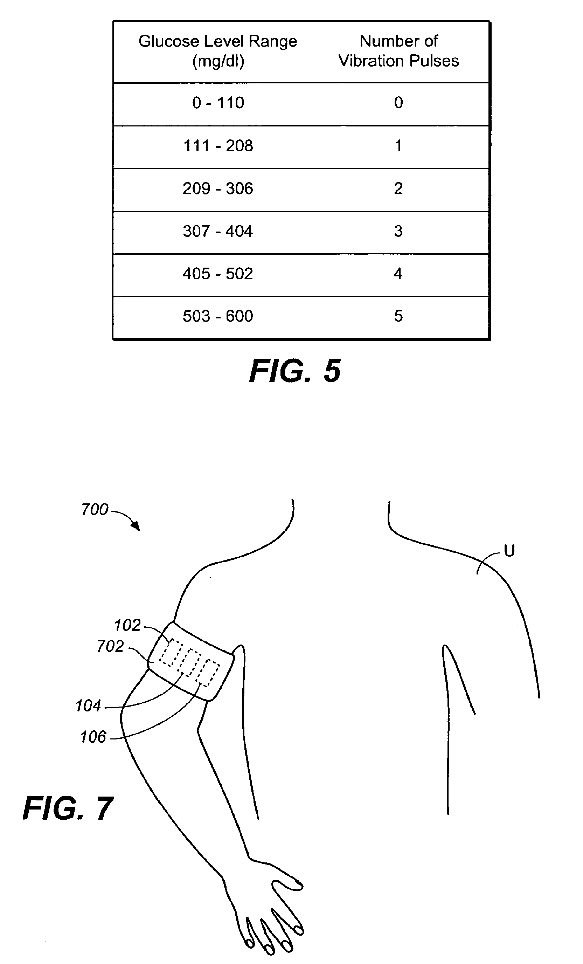

FIG. 5 is a table listing six glucose concentration ranges and corresponding user-perceived sensations (i.e., user-perceived sensations consisting of a predetermined number of vibration pulses, each pulse being of an identical predetermined duration) as can be employed in embodiments of the present invention. If a user is immersed in physical activity, it may be difficult for the user to perceive and identify the amplitude or duration of a single vibratory pulse. Therefore, a particularly beneficial proportionality between a user-perceived sensation (such as a user-perceived vibratory sensation) and the user's bodily fluid analyte concentration can be achieved using a step-wise proportionality based on the number of vibratory pulses (each pulse being of an identical duration) as tabulated in FIG. 5.

Moreover, to garner a user's attention, a pre-alert user-perceived sensation can be generated by devices according to embodiments of the present invention prior to generating the user-perceived sensation. The pre-alert user-perceived sensation can be the identical to or different than the user-perceived sensation itself. For example, a pre-alert user-perceived vibratory sensation of relatively long duration can be employed to make the user generally aware of the sensation, thereby making subsequent user-perceived sensations more easily recognized (for example, more easily counted).

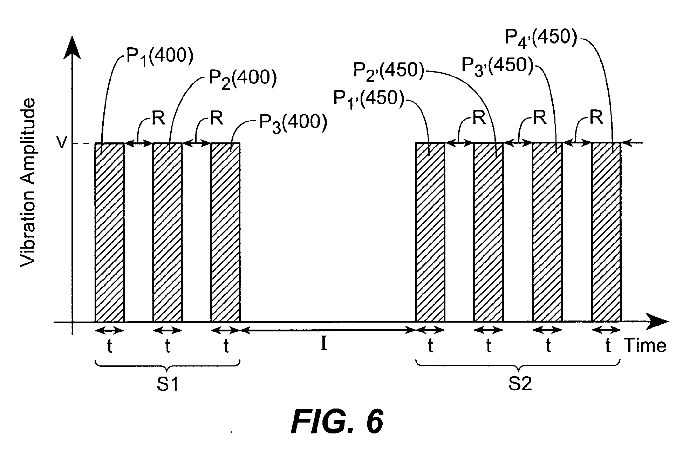

FIG. 6 is a graph of vibration amplitude (in units of volts) as a function of time depicting two user-perceived sensations, each consisting of a series of pulses that serve to illustrate the use of a step-wise proportionality such as that of FIG. 5. Referring to FIGs. 5 and 6, a first series $S_1$ of three vibration pulses (i.e., pulses $P_1(400)$, $P_2(400)$ and $P_3(400)$) is depicted. A predetermined time interval I (for example, 2 minutes) separates first series S 1 from second series $S_2$ of three vibration pulses $P_{1'}(450)$, $P_{2'}(450)$, $P_{3'}(450)$, and $P_{4'}(450)$. In other words, in the embodiment of FIGs. 5 and 6, a user-perceived sensation consisting of a series of vibratory pulses is generated at a predetermined time interval.

In FIG. 6, each pulse within a given series has a duration of time "t" (for example, 0.2 seconds), an amplitude of "V," and is separated from the next pulse within the series by a duration "R" (for example, 0.3 seconds). First series $S_1$ corresponds to a glucose concentration of 400 mg/dL and, therefore, has a pulse count of three. Second series $S_2$ corresponds to a glucose concentration of 450 mg/dL and, therefore, has a pulse count of four.

Once apprised of the present disclosure, one skilled in the art will be aware of other methods of achieving proportionality. For example, proportionality can be achieved using vibration frequency or changing the time elapsed between pulses of vibration.

It should be noted that since devices according to embodiments of the present invention generate a user-perceived sensation at predetermined time intervals, the devices beneficially enable a user to perceive not only their bodily fluid analyte concentration at a single moment in time but to also perceive trends in their bodily fluid analyte concentration. The user can then associate the concentration and concentration trends with, for example, their physical state (e.g., whether they are tired, dizzy or experiencing a headache) and/or recent activities (e.g., meals eaten or activity undertaken). The devices, therefore, serve to train a user in the recognition of their bodily fluid analyte concentration and concentration trends. These functions and benefits are distinguished over devices that include conventional alarms configured to notify a user when dangerous bodily fluid concentrations occur. Such conventional alarms are not generated at predetermined time intervals but only when the dangerous bodily fluid concentrations occur. Such conventional alarms are also not proportional to the bodily fluid analyte concentration.

FIG. 7 is a simplified illustration of device 700 according to another exemplary embodiment of the present invention employed on an arm of a user U. Device 700 is essentially device 100 of FIG. 1 configured as an armband mounted device. Device 700 includes an analyte monitoring module 102, a control module 104 and a sensation generation module 106 integrated within armband 702. Device 700 is configured for removable attachment to a user's arm using any suitable technique.

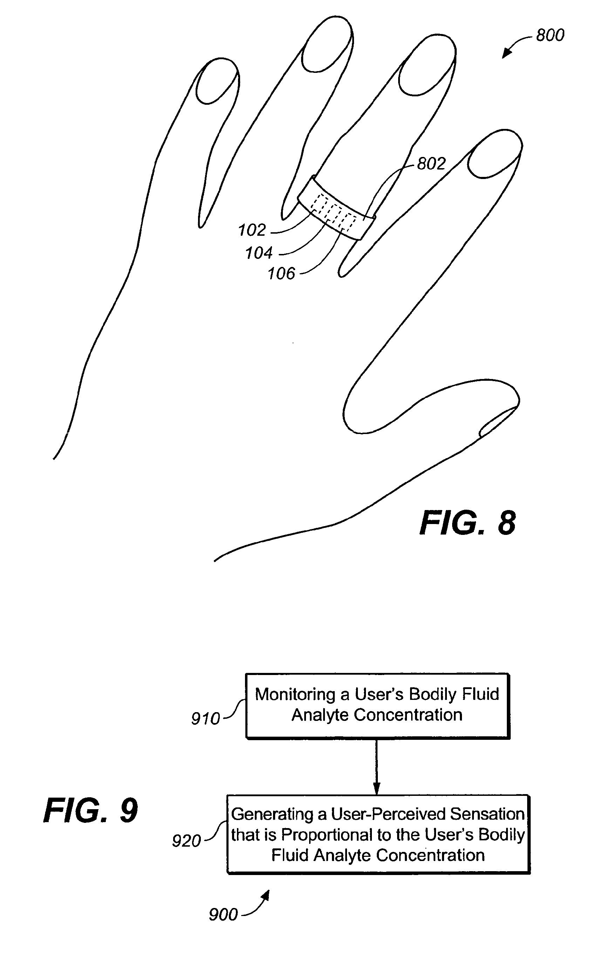

FIG. 8 is a simplified illustration of device 800 according to another exemplary embodiment of the present invention employed on a finger of a user's hand H. Device 800 is essentially device 100 of FIG. 1 configured as a finger ring. Device 800, therefore, includes an analyte monitoring module 102, a control module 104 and a sensation generation module 106 integrated within ring 802. Such a ring-shaped device can be worn on user's finger without attracting undue attention.

Since the user-perceived sensations generated by devices according to embodiments of the present invention are non-visual in nature, the user need not interrupt their activities to read bodily fluid analyte concentration values. Devices according to the present invention that employ tactile user-perceived sensations (such as vibration) are also beneficial in that they provide training in a discrete manner that does not attract the attention of bystanders.

It is envisioned that over time a user will come to associate the user-perceived sensations (which are proportional to their bodily fluid analyte concentration) with their physical state at the moment the user-perceived sensation is perceived and/or with recent activities such as the intake of various foods, stressful events or exercise. For example, high bodily fluid analyte concentrations could be associated with the physical state of a mild headache while low bodily fluid analyte concentration could be associated with the physical state of tiredness. Thereafter, even in the absence of the device, a person who had been trained by using the device could assess their bodily fluid analyte concentration based on perception of their physical state and take appropriate action (e.g., food consumption or exercise) to control the bodily fluid analyte concentration.

Devices according to embodiments of the present invention train a user to associate changes in their bodily fluid analyte concentration (e.g., glucose) with natural bodily sensations such as dizziness, tiredness, and headaches and/or natural activities (e.g., the eating of various foods and exercise). The devices, therefore, serve as a training aid by teaching a user over time how to assess their bodily fluid analyte concentration based on their physical state and/or activities and to beneficially modify such bodily fluid analyte concentration by modifications to lifestyle, such as food intake and exercise.

FIG. 9 is a flow diagram depicting stages in method 900 for training a user in recognition of the user's bodily fluid analyte concentration and concentration trends according to an exemplary embodiment of the present invention. Method 900 includes monitoring a user's bodily fluid analyte concentration (for example, a user's whole blood glucose concentration) with an analyte monitoring module of a device for training a user in recognition of the user's bodily fluid analyte concentration, as set forth in step 910.

At step 920, method 900 also includes generating, using a generation module of the device, a user-perceived sensation (e.g., a user-perceived vibratory sensation) at predetermined time intervals that is proportional the user's bodily fluid analyte concentration in a predetermined manner.

Once apprised of the present disclosure, one skilled in the art will recognize that method 900 can be practiced using devices according to embodiments of the present invention. Therefore, any of the functional characteristics and benefits described with respect to devices according to the present invention can be incorporated into method 900.

It should be understood that various alternatives to the embodiments of the invention described herein may be employed in practicing the invention. It is intended that the following claims define the scope of the invention and that methods and structures within the scope of these claims and their equivalents be covered thereby.

## Claims

1. A method of training a user in recognition of the user's bodily fluid analyte concentration and concentration trends comprising:

    monitoring a user's bodily fluid analyte concentration with an analyte monitoring module of a device for training a user in recognition of the user's bodily fluid analyte concentration; and
    generating a user-perceived sensation, at predetermined time interval, that is proportional the user's bodily fluid analyte concentration in a predetermined manner using a sensation generation module of the device.

2. The method of claim 1 wherein the generating step generates a user-perceived vibratory sensation.

3. The method of claim 2 wherein a duration of the user-perceived vibratory sensation is proportional to the user's bodily fluid analyte concentration in predetermined proportional manner.

4. The method of claim 2 wherein an amplitude of the user-perceived vibratory sensation is proportional to the user's bodily fluid analyte concentration in predetermined proportional manner.

5. The method of claim 2 wherein the user-perceived vibratory sensation is proportional to the user's bodily fluid analyte concentration in predetermined proportional manner based on a count of user-perceived vibratory sensations.

6. The method of claim 1 wherein the user-perceived sensation is proportional to the user's bodily fluid analyte concentration in a predetermined step-wise manner.

7. The method of claim 1 wherein the monitoring step monitors a user's bodily fluid glucose concentration.

8. The method of claim 1 the generating step also generates a pre-alert user-perceived sensation prior to generating the user-perceived sensation.

9. A device comprising:

    means for monitoring a user's bodily fluid analyte concentration for training a user in recognition of the user's bodily fluid analyte concentration; and
    means for generating a user-perceived sensation, at predetermined time interval, that is proportional to the user's bodily fluid analyte concentration in a predetermined manner.

10. The device of claim 9 wherein the means of generating a user-perceived sensation generates a user-perceived vibratory sensation.

11. The device of claim 10 wherein a duration of the user-perceived vibratory sensation, or wherein an amplitude of the user-perceived vibratory sensation, is proportional to the user's bodily fluid analyte concentration in predetermined proportional manner.

12. The device of claim 10 wherein the user-perceived vibratory sensation is proportional to the user's bodily fluid analyte concentration in predetermined proportional manner based on a count of user-perceived vibratory sensations.

13. The device of claim 9 wherein the user-perceived sensation is proportional to the user's bodily fluid analyte concentration in a predetermined step-wise manner.

14. The device of claim 9 wherein the means of generating a user-perceived sensation generates a pre-alert user-perceived sensation prior to generating the user-perceived sensation.

15. The device of claim 9, wherein the means of monitoring the user's bodily fluid anaylte concentration determines whether the analyte concentration is above a threshold value, and wherein if the analyte concentration is less than or equal to a threshold value, no user-perceived sensation will be generated.

**FIG. 1**

100

**FIG. 2**

104

FIG. 3

FIG. 4

| Glucose Level Range (mg/dl) | Number of Vibration Pulses |
|:---:|:---:|
| 0 - 110 | 0 |
| 111 - 208 | 1 |
| 209 - 306 | 2 |
| 307 - 404 | 3 |
| 405 - 502 | 4 |
| 503 - 600 | 5 |

**FIG. 5**

**FIG. 7**

**FIG. 6**

*800*

*802*

*102*
*104*
*106*

***FIG. 8***

| Monitoring a User's Bodily Fluid Analyte Concentration |
|---|

*910*

***FIG. 9***

| Generating a User-Perceived Sensation that is Proportional to the User's Bodily Fluid Analyte Concentration |
|---|

*920*

*900*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5497772 A
- US S140985 A
- US 6175752 B
- US 7110803 B
- US 7150975 B